# EUROPÄISCHE PATENTSCHRIFT

(11) **EP 1 984 910 B1**
(45) Veröffentlichungstag und Bekanntmachung des Hinweises auf die Patenterteilung: **18.11.2015**
(21) Anmeldenummer: 06807702.3
(22) Anmeldetag: 31.10.2006
(51) Int. Cl.: G10L 15/22

(54) **VERFAHREN UND SYSTEM ZUM BEREITSTELLEN VON SPRACHDIALOGANWENDUNGEN**
METHOD AND SYSTEM FOR PREPARING SPEECH DIALOGUE APPLICATIONS
PROCÉDÉ ET SYSTÈME POUR FOURNIR DES APPLICATIONS DE DIALOGUE VOCAL

(30) Priorität: 13.02.2006 DE 102006006551
(43) Veröffentlichungstag der Anmeldung: 29.10.2008
(73) Patentinhaber: Svox AG, 8048 Zürich (CH); Fraunhofer-Gesellschaft zur Förderung der angewandten Forschung e.V., 80686 München (DE)
(72) Erfinder: BLOCK, Hans-Ulrich, 81675 München (DE); GEHRKE, Manfred, 82205 Gilching (DE); SCHACHTL, Stefanie, 82239 Alling (DE); BERTON, André, 89075 Ulm (DE); REGEL-BRIETZMANN, Peter, 89075 Ulm (DE); SCHÖN, Friedrich, 10963 Berlin (DE)
(74) Vertreter: PATWIL AG
(86) Internationale Anmeldenummer: PCT/EP2006/067997
(87) Internationale Veröffentlichungsnummer: WO 2007/093236

(56) Entgegenhaltungen:
- EP-A- 1 679 695
- US-A1- 2002 184 373
- R MALAKA, J HAUESSLER, H ARAS: "SmartKom Mobile - Intelligent Ubiquitous User Interaction" PROCEEDINGS OF IUI'04, 13. Januar 2004 (2004-01-13), Seiten 310-312, XP002414901 Madeira, Funchal, Portugal
- SILKE GORONZY ET AL: "The Dynamic, Multi-lingual Lexicon in SmartKom" PROCEEDINGS OF EUROSPEECH 2003, September 2003 (2003-09), Seite 1937, XP007006746 Geneva, Switzerland
- REITHINGER N ET AL: "SmartKom: adaptive and flexible multimodal access to multiple applications" ICMI'03. 5TH. INTERNATIONAL CONFERENCE ON MULTIMODAL INTERFACES. VANCOUVER, BRITISH COLUMBIA, CANADA, NOV. 5 - 7, 2003, INTERNATIONAL CONFERENCE ON MULTIMODAL INTERFACES, NEW YORK, NY : ACM, US, Bd. CONF. 5, 5. November 2003 (2003-11-05), Seiten 101-108, XP002308953 ISBN: 1-58113-621-8

## Beschreibung

Die Erfindung betrifft ein Verfahren und ein System zum Bereitstellen von Sprachdialoganwendungen auf mobilen Endgeräten, insbesondere auf mobilen Endgeräten, die in Fahrzeugen vorgesehen sind.

US 2002/184373 A1 beschreibt ein Netzwerk bei dem die Bandbreite mit einem speziellen Protokoll erhöht ist. Bei Sprachdialoganwendungen können aufgrund von grossen Datenmengen Probleme auftreten.

Bei Sprachdialogsystemen kann man zwischen so genannten Command- and Control-Sprachdialoganwendungen und Systemen for Informationsdialoge unterscheiden. Command- and Control-Systeme dienen zur Eingabe von Sprachbefehlen, beispielsweise zur Sprachbedienung eines Navigationssystems innerhalb eines Fahrzeugs. Über Sprachdialogsysteme werden nicht Befehle zur Steuerung eines Gerätes eingegeben, sondern der Benutzer sucht nach Informationen zu einem beliebigen Thema, beispielsweise Hotelinformationen. Bei Sprachdialoganwendungen müssen die zur Verfügung gestellten Informationen stets aktuell sein. Je nach Anwendung ist es daher notwendig, dass die entsprechenden Sprachdialoganwendungen ständig, beispielsweise stündlich oder täglich, aktualisiert werden können.

In mobilen Endgeräten, wie sie in Fahrzeugen eingesetzt werden, sind bisher lediglich Sprachdialoganwendungen zur Eingabe von Sprachsteuerbefehlen vorgesehen, die mittels Datenträger aktualisiert werden. Beispielsweise kann die Sprachbedienung für ein Navigationssystem innerhalb eines Fahrzeugs über eine CD geladen bzw. aktualisiert werden. Gemäss R. Malaka, J. Haeussler, H. Aras: "SmartKom Mobile-Intelligent Ubiquitous User Interaction" Proceedings of IUI'04, 13. Januar 2004, Seiten 310-312, XP002414901 Madeira, Funchal, Portugal stellen herkömmliche mobile Endgeräte die Verbindung zu einem Datennetz, beispielsweise dem Internet, über ein drahtloses Netzwerk, insb. ein UMTS-Netz, ein GMS-Netz ein WLAN-Netz her. Eine UMTS- oder GMS-Verbindung eignet sich allerdings aufgrund seiner niedrigen Bandbreite nicht, um Sprachdialoganwendungen zur Abfrage von Informationen zu übertragen, da derartige Sprachdialoganwendungen sehr große Datenmengen umfassen. Eine WLAN-Verbindung ist nicht geeignete augrund seiner geringen Reichweite.

Es ist daher die Aufgabe der vorliegenden Erfindung, ein Verfahren und ein System zum Bereitstellen von Sprachdialoganwendungen zur Abfrage von Informationen auf mobilen Endgeräten zu schaffen.

Diese Aufgabe wird erfindungsgemäß durch ein Verfahren mit den in Anspruch 1 angegebenen Merkmalen und durch ein System mit den in Patentanspruch 13 angegebenen Merkmalen gelöst.

Ein Vorteil des erfindungsgemäßen Verfahrens besteht darin, dass die Sprachdialoganwendungen gleichzeitig einer Vielzahl von mobilen Endgeräten zur Verfügung gestellt werden können.

Ein weiterer Vorteil des erfindungsgemäßen Verfahrens besteht darin, dass die Sprachdialoganwendungen in einfacher Weise sehr zeitnah aktualisierbar sind.

In einer bevorzugten Ausführungsform des erfindungsgemäßen Verfahrens weist die Sprachdialoganwendung Hintergrundsystemdaten auf.

In Ausführungsformen des erfindungsgemäßen Verfahrens weist jede Sprachdialoganwendung jeweils einen Zeitstempel für den Zeitpunkt der Erzeugung auf.

In einer bevorzugten Ausführungsform des erfindungsgemäßen Verfahrens ist die Beschreibungssprache eine XML-Beschreibungssprache.

In einer bevorzugten Ausführungsform des erfindungsgemäßen Verfahrens weist jede Sprachdialoganwendung jeweils einen Namen zu deren Identifizierung auf.

In einer bevorzugten Ausführungsform des erfindungsgemäßen Verfahrens sind die Hintergrundsystemdaten in Java programmiert.

In einer weiteren bevorzugten Ausführungsform des erfindungsgemäßen Verfahrens werden auch die Hintergrundsystemdaten mit einer zugehörigen Sprachdialoganwendung mittels digitalem Rundfunk an die mobilen Endgeräte übertragen.

In einer alternativen Ausführungsform des erfindungsgemäßen Verfahrens werden die Hintergrundsystemdaten nach Empfang einer Sprachdialoganwendung durch das mobile Endgerät über eine bidirektionale Mobilfunkschnittstelle des mobilen Endgerätes abgefragt.

In einer bevorzugten Ausführungsform des erfindungsgemäßen Verfahrens werden die Sprachdialoganwendungen in einem Server erzeugt, der an ein Datennetz angeschlossen ist.

In einer bevorzugten Ausführungsform des erfindungsgemäßen Verfahrens wird das Datennetz durch das Internet gebildet.

In einer bevorzugten Ausführungsform des erfindungsgemäßen Verfahrens werden die erzeugten Sprachdialoganwendungen in ein erstes Verzeichnis des Servers gespeichert und von dem ersten Verzeichnis des Servers in ein zweites Verzeichnis des Servers kopiert, wenn die jeweilige Sprachdialoganwendung als vollständig erkannt wird.

In einer bevorzugten Ausführungsform des erfindungsgemäßen Verfahrens werden die in das zweite Verzeichnis des Servers kopierten Sprachdialoganwendungen durch einen Rundfunksender an einen Rundfunkempfänger des mobilen Endgerätes in regelmäßigen Zeitabständen übertragen.

In einer bevorzugten Ausführungsform des erfindungsgemäßen Verfahrens werden die durch den Rundfunkempfänger des mobilen Endgerätes empfangenen Sprachdialoganwendungen in einem ersten Verzeichnis des mobilen Endgerätes gespeichert und anschließend aus dem ersten Verzeichnis des mobilen Endgerätes in ein zweites Verzeichnis des mobilen Endgerätes kopiert, wenn der jeweilige Zeitstempel der Sprachdialoganwendung anzeigt, dass die Sprachdialoganwendung jünger ist als eine in dem zweiten Verzeichnis des mobilen Endgerätes gespeicherte entsprechende Sprachdialoganwendung.

In einer bevorzugten Ausführungsform des erfindungsgemäßen Verfahrens werden die Sprachdialoganwendungen durch den Server automatisch aus lokalen Internetseiten generiert.

In Ausführungsformen des erfindungsgemäßen Verfahrens werden die Sprachdialoganwendungen von dem Rundfunksender an die Rundfunkempfänger der in seinem Sendegebiet befindlichen mobilen Endgeräte über eine bestimmte lokale Rundfunkempfangsfrequenz übertragen.

In Ausführungsformen des erfindungsgemäßen Verfahrens werden jeder lokalen Rundfunksempfangsfrequenz Internetadressen verschiedener lokaler Internetseiten zugeordnet, aus denen der Server lokale Sprachdialoganwendungen zur Übertragung an die in dem Sendegebiet des Rundfunksenders befindlichen mobilen Endgeräte automatisch erzeugt.

Bei einer bevorzugten Ausführungsform des erfindungsgemäßen Systems ist der Server an ein Datennetz angeschlossen.

Bei einer bevorzugten Ausführungsform des erfindungsgemäßen Systems wird das Datennetz durch Internet gebildet.

Bei einer bevorzugten Ausführungsform des erfindungsgemäßen Systems weist jedes mobile Endgerät eine Sprachdialogmaschine zur Verarbeitung der empfangenen Sprachdialoganwendungen und ein Hintergrundsystem mit gespeicherten Informationsdialogdaten auf.

In einer bevorzugten Ausführungsform des erfindungsgemäßen Systems weist die Sprachdialogmaschine eine Sprachinterpretationseinheit zur Interpretation von Daten auf, die von einer automatischen Spracherkennungseinheit abgegeben werden.

In einer bevorzugten Ausführungsform des erfindungsgemäßen Systems weist die Sprachdialogmaschine eine Ausgabeeinheit zur Ausgabe von Daten an eine Sprachsyntheseeinheit auf.

In einer bevorzugten Ausführungsform des erfindungsgemäßen Systems weist das mobile Endgerät eine Sendempfangseinheit für einen mobilen Telefonanschluss auf.

In einer bevorzugten Ausführungsform des erfindungsgemäßen Systems ist das mobile Endgerät in einem zugehörigen Fahrzeug angebracht.

Im Weiteren werden bevorzugte Ausführungsformen des erfindungsgemäßen Verfahrens und des erfindungsgemäßen Systems zum Bereitstellen von Sprachdialoganwendungen für mobile Endgeräte unter Bezugnahme auf die beigefügten Figuren zur Erläuterung erfindungswesentlicher Merkmale beschrieben.

Es zeigen:
- Figur 1: eine Anordnung gemäß einer bevorzugten Ausführungsform des erfindungsgemäßen Systems zum Bereitstellen von Sprachdialoganwendungen für mobile Endgeräte;
- Figur 2: ein Blockschaltbild einer bevorzugten Ausführungsform eines mobilen Endgerätes gemäß der Erfindung;
- Figur 3: die Datenstruktur einer Sprachdialoganwendung gemäß einer bevorzugten Ausführungsform des erfindungsgemäßen Verfahrens;
- Figur 4: ein Blockschaltbild einer alternativen Ausführungsform des mobilen Endgerätes gemäß der Erfindung;
- Figur 5: ein Ablaufdiagramm zur Erläuterung der Funktionsweise des erfindungsgemäßen Verfahrens auf Sendeseite;
- Figur 6: ein weiteres Ablaufdiagramm zur Erläuterung der Funktionsweise des erfindungsgemäßen Verfahrens auf Empfangsseite.

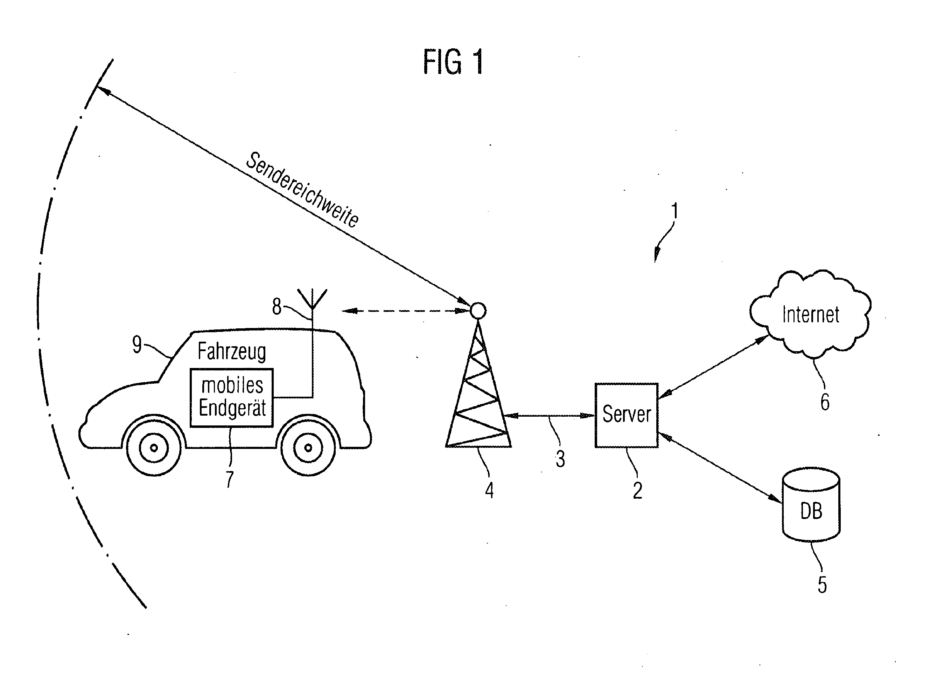

Wie man aus Figur 1 erkennen kann, umfasst das erfindungsgemäße System 1 zum Bereitstellen von Sprachdialoganwendungen einen Server 2 zum Erzeugen von Sprachdialoganwendungen. Die erzeugten Sprachdialoganwendungen werden über eine Dätenübertragungsleitung 3, beispielsweise mittels FTP zu einem digitalen Rundfunksender 4 übertragen. Der Server 2 ist beispielsweise an eine Datenbank 5 und an ein Datennetz 6, insbesondere an das Internet angeschlossen. In einer bevorzugten Ausführungsform des erfindungsgemäßen Verfahrens erzeugt der Server 2 Sprachdialoganwendungen automatisch auf der Grundlage von Dokumenten, die durch das Datennetz 6 zur Verfügung gestellt werden, insbesondere auf Grundlage von Internetseiten. In einer alternativen Ausführungsform werden die Sprachdialoganwendungen manuell programmiert.

Der Rundfunksender 4 strahlt die von dem Server 2 empfangenen Sprachdialoganwendungen an mobile Endgeräte 7 aus, die sich innerhalb seines Sendegebietes befinden. Hierzu sind die mobilen Endgeräte 7 jeweils an eine Empfangsantenne 8 angeschlossen, die das digitale Rundfunksignal von dem Rundfunksender 4 empfängt. Die mobilen Endgeräte 7 befinden sich vorzugsweise in einem Fahrzeug 9, beispielsweise in einem Kraftfahrzeug, in einem Zug, in einem Schiff oder in einem Flugzeug.

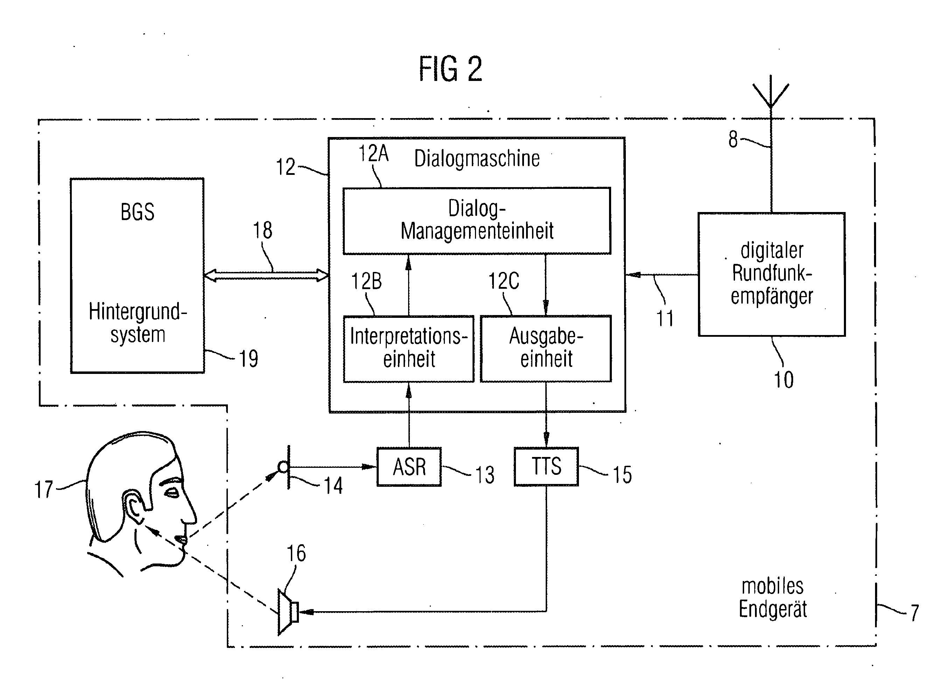

Figur 2 zeigt ein Blockschaltbild einer bevorzugten Ausführungsform des mobilen Endgerätes 7. Das mobile Endgerät 7 enthält einen digitalen Rundfunkempfänger 10, der über eine Leitung 11 an eine Sprachdialogmaschine 12 angeschlossen ist. Die Sprachdialogmaschine 12 dient zur Verarbeitung der durch den digitalen Rundfunkempfänger 10 empfangenen Sprachdialoganwendungen. Die Sprachdialogmaschine 12 enthält eine Dialogmanagementeinheit 12A, die an eine Interpretationseinheit 12B und an eine Ausgabeeinheit 12C angeschlossen ist. Die Sprachinterpretationseinheit 12B empfängt Daten von einer automatischen Spracherkennungseinheit 13 (ASR: Automatic Speech Recognition), die an ein Mikrofon 14 angeschlossen ist. Die Ausgabeeinheit 12C der Sprachdialogmaschine 12 ist an eine Sprachsyntheseeinheit 15 angeschlossen (TTS: Text to Speech), welche das erzeugte analoge Sprachsignal über einen Lautsprecher 16 abgibt. Ein Nutzer 17 führt über das Mikrofon 14 und den Lautsprecher 16 einen Sprachdialog mit dem mobilen Endgerät 7.

Die Dialogmaschine 12 des mobilen Endgerätes 7 ist ferner über Leitungen 18 mit einem Hintergrundsystem 19 (BGS: Background System) verbunden, in dem Informationsdialogdaten gespeichert sind. Die Hintergrundsystemdaten des Hintergrundsystems 19 sind beispielsweise in Java oder in C programmiert.

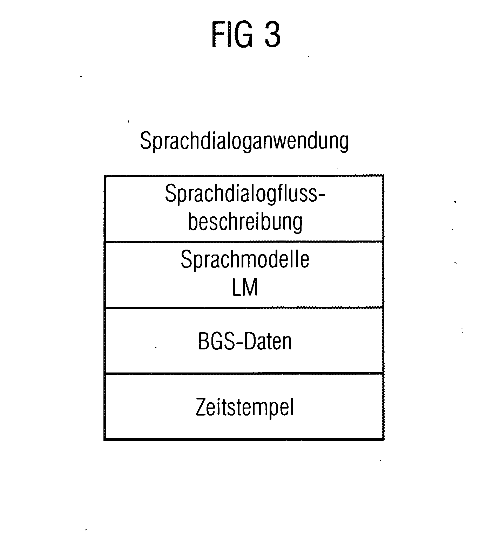

Figur 3 zeigt eine bevorzugte Ausführungsform einer Datenstruktur einer Sprachdialoganwendung gemäß der Erfindung. Die Sprachdialoganwendung weist eine Sprachdialogflussbeschreibung auf. Diese stellt eine formale Beschreibung eines Sprachdialogs dar und ist in einer bestimmten Beschreibungssprache, beispielsweise in einer XML-Beschreibungssprache (Voice XML) beschrieben. Darüber hinaus enthält die Sprachdialoganwendung Sprachmodelle LM (Language Model) für einzelne Dialogschritte des beschriebenen Sprachdialogs. Voice XML (Voice Extended Markup Language) dient der Beschreibung von Dialogabläufen in einem Sprachdialogsystem und stellt eine Variante der Datenbeschreibungssprache XML dar. Voice XML weist Datenkonstrukte auf, die dem Nutzer im Dialogablauf gewisse Freiheiten eröffnen, so genanntes form filling. Der Dialogmanager bestimmt die Systemreaktion, vorzugsweise dynamisch auf Basis der Dialoghistorie.

Das Spracherkennungssystem 13 empfängt ein analoges Sprachsignal von dem Mikrofon 14. Dieses Sprachsignal wird beispielsweise mittels einer Soundkarte digitalisiert und anschließend mittels Fouriertransformation in ein Frequenzspektrum umgewandelt. Das Frequenzspektrum wird anschließend mit dem Inhalt einer Datenbank verglichen und das Symbol des akustisch ähnlichsten Referenzvektors weitergegeben. Die Erkennung erfolgt beispielsweise mittels Hidden-Markov-Modellen (HMM). Mittels eines Sprachmodells wird anschließend die Wahrscheinlichkeit bestimmter Wortkombinationen bestimmt, um dadurch falsche Hypothesen auszuschließen. Dazu wird entweder ein Grammatik-Modell oder eine Trigramm-Statistik wendet. Eine Bi- oder Trigramm-Statistik speichert die Auftrittswahrscheinlichkeit von Wortkombinationen aus zwei oder drei Wörtern.

Neben der Sprachdialogflussbeschreibung und den Sprachmodellen umfasst eine Sprachdialoganwendung bei einer bevorzugten Ausführungsform ferner Hintergrundsystemdaten (BGS: Background System). Diese BGS-Daten sind beispielsweise in Java programmiert und enthalten aktuelle Informationsdaten zu bestimmten Themen.

Bei einer bevorzugten Ausführungsform enthält jede Sprachdialoganwendung zusätzlich einen Zeitstempel, der den Zeitpunkt ihrer Erzeugung wiedergibt.

Bei einer ersten Ausführungsform des erfindungsgemäßen Verfahrens werden die Hintergrundsystemdaten zusammen mit dem Sprachmodell und der Sprachdialogflussbeschreibung innerhalb einer Sprachdialoganwendung mittels digitalem Rundfunk von dem Rundfunksender 4 zu dem Rundfunkempfänger 10 innerhalb des mobilen Endgerätes 7 übertragen.

Bei einer alternativen Ausführungsform enthält die per Rundfunk übertragene Sprachdialoganwendung nicht die Hintergrundsystemdaten, sondern eine dafür ersatzweise vorgesehene Adresse, beispielsweise eine IP-Adresse. Nachdem das mobile Endgerät 7 die Sprachdialoganwendung von dem digitalen Rundfunksender 4 empfangen hat, baut es mittels einer separaten Datenverbindung, insbesondere einer mobilen Telefonverbindung, einen bidirektionalen Übertragungskanal zu einer Basisstation eines Datennetzes auf.

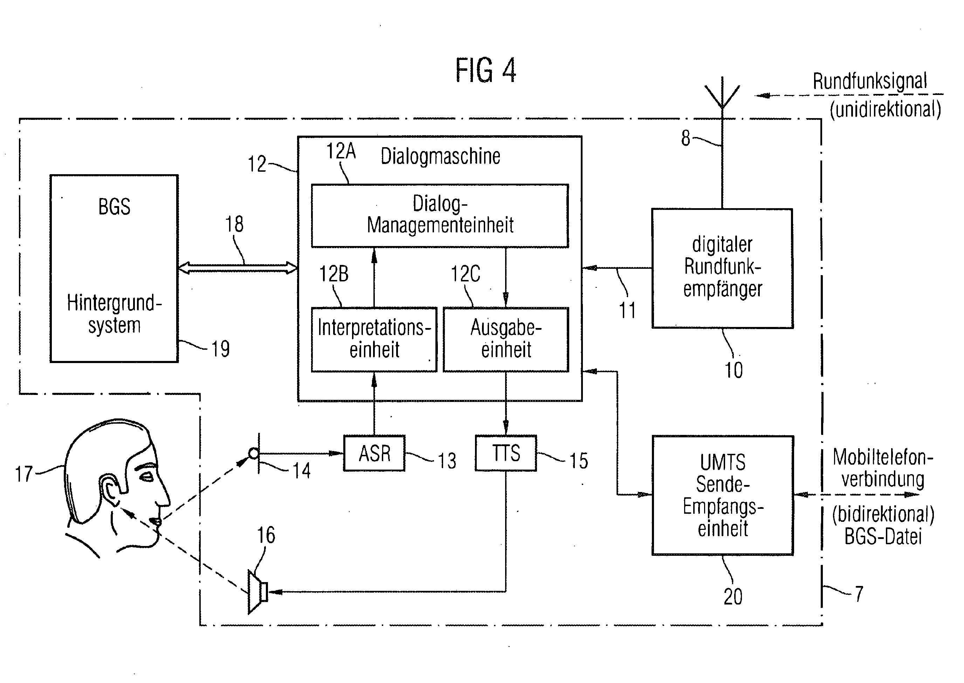

Figur 4 zeigt ein mobiles Endgerät 7 mit einer weiteren Sendeempfangseinheit 20, beispielsweise einer UMTS-Sende-/Empfangseinheit zum Aufbau einer bidirektionalen Mobiltelefonverbindung. Nachdem die Dialogmaschine 12 eine Sprachdialoganwendung von dem Rundfunksender 4 über eine unidirektionale Rundfunkverbindung erhalten hat, extrahiert, die darin enthaltene IP-Adresse und sendet eine Anfrage über die aufgebaute Mobiltelefonverbindung, um die entsprechenden Hintergrundsystemdaten bzw. Informationsdaten zu erhalten, die zu der Sprachdialoganwendung gehören. Nach Empfang der Hintergrundinformationsdaten werden diese durch die Dialogmaschine 12 in dem Hintergrundsystem 19 abgelegt. Mit dem erfindungsgemäßen System ist es für den Nutzer möglich, einen Sprachdialog mit dem mobilen Endgerät 7 zu führen, um Informationen zu einem beliebigen Thema zu erhalten. Dabei führt der Nutzer 17 einen Dialog mit dem mobilen Endgerät 7. Bewegt sich ein Nutzer 17 innerhalb eines Fahrzeugs 9 in einem Sendegebiet eines lokalen Rundfunksenders 4, kann er beispielsweise lokale Informationen durch Führen eines Sprachdialogs mit dem mobilen Endgerät 7 erhalten. Bewegt sich der Nutzer 17 beispielsweise in einem Gebiet eines lokalen Rundfunksenders im Bereich Köln und möchte sich über Musikangebote am Abend in Köln informieren, kann er dies durch Führen eines Dialogs mit dem mobilen Endgerät 7 herausfinden. Der Sprachdialog kann entweder durch den Nutzer 17 oder durch das mobile Endgerät 7 initiiert werden.

Beispielsweise wird der Nutzer 17 durch das mobile Endgerät 7 gefragt, ob er Informationen zu einem Freizeitangebot in dem Sendegebiet erhalten möchte. Wird dies durch den Nutzer 17 bejaht, kann sich dieser beispielsweise nach Musikangeboten erkundigen. Der Nutzer fragt beispielsweise, ob es am Abend Jazz-Konzerte in Köln gibt.

Die Dialogmaschine 12 extrahiert daraus Bezugswörter, wie beispielsweise "Jazz", "Konzert", "Köln" und generiert eine Suchanfrage an das Hintergrundsystem 19, beispielsweise: Suche (Musik = "Jazz"; Stadt = "Köln"; Zeit = "Abend").

Das Hintergrundsystem 19 führt einen Suchprozess durch und beantwortet die Suchanfrage durch Abgabe eines Ausgabedatensatzes an die Dialogmaschine 12.

Die Dialogmaschine 12 gibt beispielsweise nach Sprachsynthese folgende Antwort an den Nutzer 17: "Jazz gibt es in Köln heute abend im Domizil in der Luxemburgerstraße 117, um 20.00 Uhr".

In einer bevorzugten Ausführungsform des erfindungsgemäßen Systems generiert der Server 2 Hintergrundinformationsdaten automatisch auf der Grundlage von Internetdokumenten des Internets 6. Hierzu wertet der Server 2 beispielsweise eine vorgegebene Gruppe von Internet-Homepages der Stadt Köln aus. Der lokale Rundfunksender 4 überträgt die Sprachdialoganwendungen an diejenigen mobilen Endgeräte, deren Rundfunkempfänger sich in seinem Sendegebiet befinden. Dabei erfolgt die Übertragung über eine bestimmte lokale Rundfunkempfangsfrequenz f. In einer bevorzugten Ausführungsform sind jeder lokalen Rundfunkempfangsfrequenz bestimmte Internetadressen verschiedener lokaler Internetseiten zugeordnet. Aus diesen lokalen Internetseiten erzeugt der Server 2 lokale Sprachdialoganwendungen zur Übertragung in dem entsprechenden lokalen Sendegebiet.

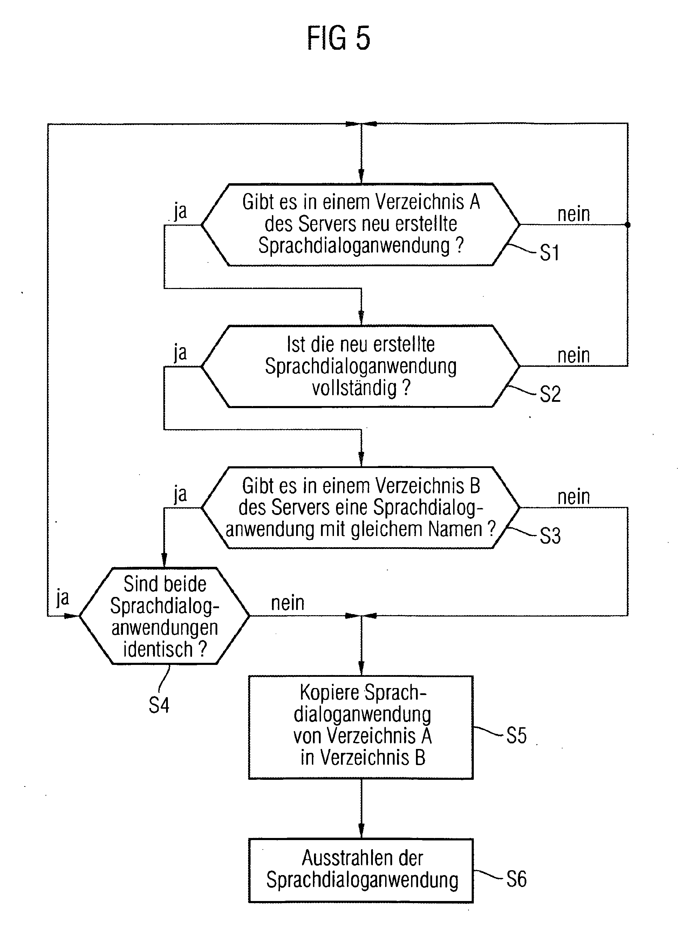

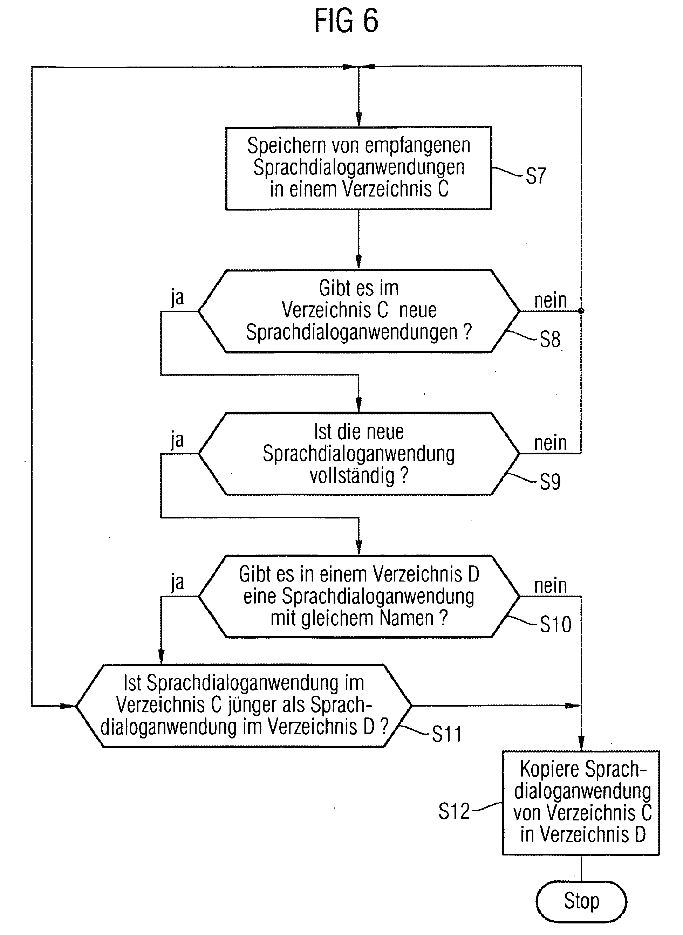

Bei dem erfindungsgemäßen Verfahren ist es von besonderer Bedeutung, dass die zur Verfügung gestellten Sprachdialoganwendungen stets aktuell sind und beispielsweise täglich oder stündlich aktualisiert werden können. Die Aktualisierung der Sprachdialoganwendung erfolgt, wie in den Figuren 5, 6 gezeigt.

Der Server 2 enthält ein erstes Verzeichnis A und ein zweites Verzeichnis B. In einem Schritt S1 prüft der Server 2, ob sich in seinem Verzeichnis A eine neu erstellte Sprachdialoganwendung befindet.

Ist dies der Fall, prüft der Server 2 ferner in einem Schritt S2 mittels einer Index-Datei, ob die Sprachdialoganwendung vollständig ist.

Ist auch dies der Fall, prüft der Server 2 ferner in einem. Schritt S3, ob es in seinem Verzeichnis B eine Sprachdialoganwendung mit gleichem Namen gibt.

Wenn dies der Fall ist, wird in einem Schritt S4 geprüft, ob die beiden Sprachdialoganwendungen gleichen Namens identisch sind.

Ist dies der Fall, kehrt der Vorgang zu Schritt S1 zurück. Sofern es keine zwei Sprachdialoganwendungen in beiden Verzeichnissen A, B gibt, die den gleichen Namen haben bzw. die beiden Sprachdialoganwendungen nicht identisch sind, kopiert der Server 2 die neu erstellte Sprachdialoganwendung von seinem Verzeichnis A in sein Verzeichnis B im Schritt S5. Die kopierte Sprachdialoganwendung wird an den Rundfunksender 4, beispielsweise mittels FTP übertragen und von dort im Schritt S6 an alle in dem Sendegebiet befindlichen mobilen Endgeräte 7 ausgestrahlt.

Wie man aus Figur 6 erkennen kann, werden in dem mobilen Endgerät 7 im Schritt S7 die von dem digitalen Rundfunkempfänger 10 empfangenen Sprachdialoganwendungen zunächst in einem Verzeichnis C zwischengespeichert.

In einem Schritt S8 wird geprüft, ob sich in dem Verzeichnis C neue Sprachdialoganwendungen befinden.

Falls dies der Fall ist, wird in einem Schritt S9 geprüft, ob die empfangene Sprachdialoganwendung vollständig ist.

Falls die Sprachdialoganwendung vollständig vorliegt, wird in einem Schritt S10 geprüft, ob in einem weiteren Verzeichnis D des mobilen Endgerätes 7 eine Sprachdialoganwendung gleichen Namens existiert.

Ist dies der Fall, wird im Schritt S11 geprüft, ob die im Verzeichnis C befindliche Sprachdialoganwendung jünger ist als die Sprachdialoganwendung in dem anderen Verzeichnis D. Diese Überprüfung erfolgt mittels des in der Sprachdialoganwendung vorgesehenen Zeitstempels. Falls die Sprachdialoganwendung in dem Empfangsverzeichnis C jünger ist als die Sprachdialoganwendung im Verzeichnis D, wird die aktualisierte Sprachdialoganwendung von dem Verzeichnis C in das Verzeichnis D im Schritt S12 kopiert und die alte Sprachdialoganwendung vorzugsweise gelöscht. Die in den Figuren 5, 6 dargestellte Vorgehensweise gewährleistet, dass nicht zweimal die gleichen Sprachdialogdaten zum Versenden freigegeben werden, sondern stets immer nur aktualisierte Fassungen der Sprachdialoganwendungen.

Die Ausstrahlung der Sprachdialogdaten erfolgt durch den Rundfunksender 4 kontinuierlich, so dass die ausgestrahlten Sprachdialoganwendungen zu einem gegebenen Zeitpunkt vollständig auf dem mobilen Endgerät 7 vorliegen.

Darüber hinaus ist sichergestellt, dass der relativ zeitaufwendige Prozess der Sprachmodellerzeugung genau nur einmal pro aktualisierter Sprachdialoganwendung erfolgt.

Durch das erfindungsgemäße Verfahren wird gewährleistet, dass der Benutzer auf seinem mobilen Endgerät 7 Sprachdialoge zu aktuellen Themen führen kann, ohne dass eine kontinuierliche WLAN-Verbindung bestehen muss. Darüber hinaus wird mit dem erfindungsgemäßen Verfahren sichergestellt, dass ein tages- bzw. stundenaktueller Wissensstand vorliegt. Bei dem mobilen Endgerät 7 kann es sich um ein beliebiges mobiles Endgerät, beispielsweise um eine Kfz-Unit oder einen PDA handeln.

## Patentansprüche

1. Verfahren zum Bereitstellen von lokalen Sprachdialoganwendungen auf mobilen Endgeräten (7) von Fahrzeugen (9) mit den folgenden Schritten:
(a) Erzeugen von lokalen Sprächdialoganwendungen durch einen Server (2), wobei die Sprachdialoganwendungen jeweils eine formale Beschreibung eines Sprachdialogs in einer bestimmten Beschreibungssprache und Sprachmodelle für einzelne Dialogschritte des Sprachdialogs aufweisen;
(b) Übertragen der erzeugten lokalen Sprachdialoganwendung mittels digitalem Rundfunk von einem Rundfunksender (4) an einen Rundfunkempfänger '(10) der jeweiligen in einem lokalen Sendegebiet des Rundfunksenders (4) befindlichen mobilen Endgeräte (7) über eine bestimmte lokale Rundfunkempfängerfrequenz (f);
(c) wobei jeder lokalen Rundfunkempfangsfrequenz (f) Internetadressen lokaler Internetseiten zugeordnet sind, aus denen der Server (2) die lokalen Sprachdialoganwendungen zur Übertragung in dem entsprechenden lokalen Sendegebiet automatisch erzeugt, und
(d) die jeweilige Sprachdialoganwendung einen Zeitstempel für den Zeitpunkt ihrer Erzeugung aufweist.

2. Verfahren nach Anspruch 1,
wobei die Sprachdialoganwendung Hintergrundsystemdaten aufweist.

3. Verfahren nach Anspruch 1,
wobei die Beschreibungssprache eine XML-Beschreibungssprache ist.

4. Verfahren nach Anspruch 1,
wobei die Sprachdialoganwendung einen Namen zu ihrer Identifizierung aufweist.

5. Verfahren nach Anspruch 2,
wobei die Hintergrundsystemdaten in Java programmiert werden.

6. Verfahren nach Anspruch 2,
wobei die Hintergrundsystemdaten mit einer zugehörigen Sprachdialoganwendung mittels digitalem Rundfunk an die mobilen Endgeräte (7) übertragen werden.

7. Verfahren nach Anspruch 2,
wobei die Hintergrundsystemdaten nach Empfang einer Sprachdialoganwendung durch das mobile Endgerät (7) über eine bidirektionale Mobilfunkschnittstelle des mobilen Endgeräts abgefragt werden.

8. Verfahren nach Anspruch 1,
wobei der Server (2) an ein Datennetz (6) angeschlossen ist.

9. Verfahren nach Anspruch 1,
wobei das Datennetz (6) durch das Internet gebildet wird.

10. Verfahren nach Anspruch 8,
wobei die erzeugten Sprachdialoganwendungen in ein erstes Verzeichnis des Servers (2) gespeichert werden und von dem ersten Verzeichnis des Servers (2) in ein zweites Verzeichnis des Servers (2) kopiert werden, wenn die jeweilige Sprachdialoganwendung als vollständig erkannt wird.

11. Verfahren nach Anspruch 10,
wobei die in das zweite Verzeichnis des Servers (2) kopierten Sprachdialoganwendungen durch einen Rundfunksender (4) an einen Rundfunkempfänger (10) des mobilen Endgerätes (7) in regelmäßigen Zeitabständen übertragen werden.

12. Verfahren nach Anspruch 11,
wobei die durch den Rundfunkempfänger (10) des mobilen Endgerätes (7) empfangenen Sprachdialoganwendungen in einem ersten Verzeichnis des mobilen Endgerätes (7) gespeichert und anschließend aus dem ersten Verzeichnis des mobilen Endgerätes (7) in ein zweites Verzeichnis des mobilen Endgerätes (7) kopiert werden, wenn der jeweilige Zeitstempel der Sprachdialoganwendung anzeigt, dass die Sprachdialoganwendung jünger ist als eine in dem zweiten Verzeichnis des mobilen Endgerätes (7) gespeicherte entsprechende Sprachdialoganwendung.

13. System zum Bereitstellen von Sprachdialoganwendungen auf mobilen Endgeräten (7) von Fahrzeugen (9) mit:
(a) einem Server (2) zum Erzeugen mindestens einer lokalen Sprachdialoganwendung, die eine in einer Beschreibungssprache programmierte formale Beschreibung eines Sprachdialogs und Sprachmodelle für Dialogschritte des Sprachdialogs aufweist; und
(b) einem Rundfunksender (4), welcher die erzeugten lokalen Sprachdialoganwendungen digital an Rundfunkempfänger (10) von mobilen Endgeräten (7), die sich in seinem lokalen Sendegebiet befinden, über eine bestimmte lokale Rundfunkempfangsfrequenz (f) ausstrahlt;
(c) wobei jeder lokalen Rundfunkempfangsfrequenz (f) Internetadressen lokaler Internetseiten zugeordnet sind, aus denen der Server (2) die lokalen Sprachdialoganwendungen zur Übertragung in dem entsprechenden lokalen Sendegebiet automatisch erzeugt, und
(d) die jeweilige Sprachdialoganwendung einen Zeitstempel für den Zeitpunkt ihrer Erzeugung aufweist.

14. System nach Anspruch 13,
wobei der Server (2) an ein Datennetz (6) angeschlossen ist.

15. System nach Anspruch 14,
wobei das Datennetz (6) das Internet ist.

16. System nach Anspruch 13,
wobei jedes mobile Endgerät (7) eines Fahrzeugs (9) eine Sprachdialogmaschine (12) zur Verarbeitung der empfangenen Sprachdialoganwendungen und
ein Hintergrundsystem (19) mit gespeicherten Informationsdialogdaten aufweist.

17. System nach Anspruch 16,
wobei die Sprachdialogmaschine (12) eine Sprachinterpretationseinheit (12B) zur Interpretation von Daten aufweist, die von einer automatischen Spracherkennungseinheit (13) abgegeben werden.

18. System nach Anspruch 16,
wobei die Sprachdialogmaschine (12) eine Ausgabeeinheit (12C) zur Abgabe von Daten an eine Sprachsyntheseeinheit (15) aufweist.

19. System nach Anspruch 13,
wobei das mobile Endgerät (7) eine Sendeempfangseinheit (20) für einen mobilen Telefonanschluss zum Empfang von Hintergrundsystemdaten aufweist.

## Claims

1. A method for providing local speech dialog applications on mobile terminals (7) of vehicles (9), comprising the following steps:
(a) producing local speech dialog applications by a server (2), whereby the speech dialog applications exhibit a formal description of a speech dialog in a specific description language and language models for individual dialog steps of the local speech dialog;
(b) transmitting the produced local speech dialog applications via digital radio by a radio transmitter (4) to a radio receiver (10) of the mobile terminals (7) located in a local transmission area of the radio transmitter (4) on a specific local radio reception frequency (f);
(c) wherein to each local radio frequency (f) internet addresses of local internet sites are assigned from which the server (2) automatically produces the local speech dialog applications to be transmitted in the respective local transmission area, and
(d) the respective speech dialog application exhibiting a time stamp of a point in time when the local speech dialog application was produced.

2. The method as claimed in claim 1, wherein the local speech dialog applications further exhibit background system data.

3. The method as claimed in claim 1, wherein the description language is an XML description language.

4. The method as claimed in claim 1, wherein the speech dialog application exhibits a name for its identification.

5. The method as claimed in claim 2, wherein the background system data are programmed in Java.

6. The method as claimed in claim 2, further comprising transmitting the background system data with an associated speech dialog application by digital radio to the mobile terminals (7).

7. The method as claimed in claim 2, wherein after receipt of a speech dialog application by the mobile terminal (7), retrieving the background system data via a bidirectional mobile radio interface of the mobile terminal (7).

8. The method as claimed in claim 1, wherein the server (2) is connected to a data network (6).

9. The method as claimed in claim 1, wherein the data network (6) is formed by the internet.

10. The method as claimed in claim 8, wherein the produced speech dialog applications are stored in a first directory of the server (2) and
are copied copying from the first directory of the server (2) to a second directory of the server as the local speech dialog applications are recognized as being complete.

11. The method as claimed in claim 10, wherein said transmitting of the local speech dialog applications occurs from the second directory of the server (2) by the radio transmitter (4) to the radio receiver (10) of the mobile terminal (7) at regular intervals.

12. The method as claimed in claim 11, wherein the local speech dialog applications received by the radio receiver (10) of the mobile terminal (7) are stored in a first directory of the mobile terminal (7) and afterwards the local speech dialog applications from the first directory of the mobile terminal (7) are copied to a second directory of the mobile terminal (7) if the time stamp thereof indicates that the local speech dialog application was produced more recently than a corresponding speech dialog application stored in the second directory of the mobile terminal (7).

13. A system for providing speech dialog applications on mobile terminals (7) of vehicles (9), comprising:
(a) a server (2) producing at least one local speech dialog application exhibiting a formal description, programmed in a description language, of a speech dialog and language models for individual dialog steps of the local speech dialog; and
(b) a radio transmitter (4) digitally transmitting the produced local speech dialog application to the radio receivers (10) of the mobile terminals (7) located in its local transmission area via a local radio reception frequency (f);
(c) wherein to each local radio frequency (f) internet addresses of at least one local internet site are assigned from which the server (2) automatically produces the local speech dialog applications for transmission in the respective local transmission area, and
(d) each speech dialog application exhibiting a time stamp of a point in time when the local speech dialog application was produced.

14. The system as claimed in claim 13, wherein the server (2) is connected to a data network (6).

15. The system as claimed in claim 14, wherein the data network (6) is the internet.

16. The system as claimed in claim 13, wherein each mobile terminal (7) of a vehicle (9) exhibits a speech dialog machine (12) for processing the received speech dialog applications and a background system (19) with stored information dialog data.

17. The system as claimed in claim 16, wherein the speech dialog machine (12) exhibits a speech interpretation unit (12B) for interpreting data which are output by an automatic speech recognition unit (13).

18. The system as claimed in claim 16, wherein the speech dialog machine (12) exhibits an output unit (12C) for outputting data to a speech synthesis unit (15).

19. The system as claimed in claim 13, wherein the mobile terminal (7) exhibits a transmitter-receiver unit (20) for a mobile telephone connection to receive background system data.

## Revendications

1. Procédé pour fournir des applications de dialogue vocal locales sur des terminaux mobiles (7) de véhicules (9) avec les étapes suivantes :
(a) génération d'applications de dialogue vocal locales par un serveur (2), dans lequel les applications de dialogue vocal présentent chacune une description formelle d'un dialogue vocal dans un langage de description défini et des modèles vocaux pour des étapes de dialogue individuelles du dialogue vocal ;
(b) transfert de l'application de dialogue vocal locale générée au moyen d'une radio numérique d'un émetteur radio (4) à un récepteur radio (10) des terminaux mobiles respectifs (7) se trouvant dans une région d'envoi locale de l'émetteur radio (4) sur une fréquence de récepteur radio locale définie (f) ;
(c) dans lequel des adresses Internet de pages Internet locales à partir desquelles le serveur (2) génère automatiquement les applications de dialogue vocal locales pour le transfert dans la région d'envoi locale correspondante sont associées à chaque fréquence de réception radio locale (f), et
(d) l'application de dialogue vocal respective présente une estampille temporelle pour l'instant de sa génération.

2. Procédé selon la revendication 1,
dans lequel l'application de dialogue vocal présente des données de système d'arrière-plan.

3. Procédé selon la revendication 1,
dans lequel le langage de description est un langage de description XML.

4. Procédé selon la revendication 1,
dans lequel l'application de dialogue vocal présente un nom pour son identification.

5. Procédé selon la revendication 2,
dans lequel les données de système d'arrière-plan sont programmées en Java.

6. Procédé selon la revendication 2,
dans lequel les données de système d'arrière-plan sont transférées avec une application de dialogue vocal associée au moyen d'une radio numérique aux terminaux mobiles (7).

7. Procédé selon la revendication 2,
dans lequel les données de système d'arrière-plan sont consultées après réception d'une application de dialogue vocal par le terminal mobile (7) par le biais d'une interface de téléphonie mobile bidirectionnelle du terminal mobile.

8. Procédé selon la revendication 1,
dans lequel le serveur (2) est raccordé à un réseau de données (6).

9. Procédé selon la revendication 1,
dans lequel le réseau de données (6) est formé par Internet.

10. Procédé selon la revendication 8,
dans lequel les applications de dialogue vocal générées sont mémorisées dans un premier répertoire du serveur (2) et sont copiées du premier répertoire du serveur (2) dans un second répertoire du serveur (2) lorsque l'application de dialogue vocal respective est identifiée comme complète.

11. Procédé selon la revendication 10,
dans lequel les applications de dialogue vocal copiées dans le second répertoire du serveur (2) sont transférées par un émetteur radio (4) à un récepteur radio (10) du terminal mobile (7) à intervalles réguliers.

12. Procédé selon la revendication 11,
dans lequel les applications de dialogue vocal reçues par le récepteur radio (10) du terminal mobile (7) sont mémorisées dans un premier répertoire du terminal mobile (7), puis copiées du premier répertoire du terminal mobile (7) dans un second répertoire du terminal mobile (7) lorsque l'estampille temporelle respective de l'application de dialogue vocal indique que l'application de dialogue vocal est plus récente qu'une application de dialogue vocal correspondante, mémorisée dans le second répertoire du terminal mobile (7).

13. Système pour fournir des applications de dialogue vocal sur des terminaux mobiles (7) de véhicules (9) avec :
(a) un serveur (2) pour la génération d'au moins une application de dialogue vocal locale qui présente une description formelle d'un dialogue vocal, programmée dans un langage de description, et des modèles vocaux pour des étapes de dialogue du dialogue vocal ; et
(b) un émetteur radio (4) qui diffuse les applications de dialogue vocal locales générées de manière numérique à un récepteur radio (10) de terminaux mobiles (7) qui se trouvent dans sa région d'envoi locale sur une fréquence de réception radio locale définie (f) ;
(c) dans lequel des adresses Internet de pages Internet locales à partir desquelles le serveur (2) génère automatiquement les applications de dialogue vocal locales pour le transfert dans la région d'envoi locale correspondante sont associées à chaque fréquence de réception radio locale (f), et
(d) l'application de dialogue vocal respective présente une estampille temporelle pour l'instant de sa génération.

14. Système selon la revendication 13,
dans lequel le serveur (2) est raccordé à un réseau de données (6).

15. Système selon la revendication 14,
dans lequel le réseau de données (6) est Internet.

16. Système selon la revendication 13,
dans lequel chaque terminal mobile (7) d'un véhicule (9) présente une machine de dialogue vocal (12) pour le traitement des applications de dialogue vocal reçues et un système d'arrière-plan (19) avec des données de dialogue d'informations mémorisées.

17. Système selon la revendication 16,
dans lequel la machine de dialogue vocal (12) présente un module d'interprétation vocale (12B) pour l'interprétation de données qui sont remises par un module de reconnaissance vocale automatique (13).

18. Système selon la revendication 16,
dans lequel la machine de dialogue vocal (12) présente un module d'émission (12C) pour la remise de données à un module de synthèse vocale (15).

19. Système selon la revendication 13,
dans lequel le terminal mobile (7) présente un module émetteur-récepteur (20) pour un branchement téléphonique mobile pour la réception de données de système d'arrière-plan.
